# EUROPEAN PATENT SPECIFICATION

(11) **EP 4 452 025 B1**
(45) Date of publication and mention of the grant of the patent: **18.02.2026**
(21) Application number: 22839801.2
(22) Date of filing: 19.12.2022
(51) Int. Cl.: A47J 31/36

(54) **BEVERAGE POD SYSTEM WITH POD EJECTOR**
GETRÄNKEPODSYSTEM MIT POD-AUSWERFER
SYSTÈME DE DOSETTES DE BOISSON AVEC ÉJECTEUR DE DOSETTES

(30) Priority: 21.12.2021 EP 21216607
(43) Date of publication of application: 30.10.2024
(73) Proprietor: Société des Produits Nestlé S.A., 1800 Vevey (CH)
(72) Inventor: VUAGNIAUX, Didier, 1188 Gimel (CH); KOLLEP, Alexandre, 1095 Lutry (CH); ZÜRCHER, Reto Markus, 9100 Herisau (CH); EISENBART, Alex, 9204 Andwil (CH)
(74) Representative: Pasquino, Fabio
(86) International application number: PCT/EP2022/086669
(87) International publication number: WO 2023/117913

(56) References cited:
- EP-A1- 1 219 217
- EP-A1- 1 767 129
- WO-A1-2007/045553
- WO-A1-2008/071352
- WO-A2-2020/114995
- US-A1- 2005 106 288
- US-A1- 2006 130 665
- US-A1- 2013 340 627

## Description

### Field of the invention

The present invention relates to the field of preparation of beverages with a system including a single-serve container comprising a beverage ingredient and a machine that has an extraction chamber in which the container can be inserted, extracted and from which it can be ejected.

### Background of the invention

Single serve containers for the automatic preparation of beverages encompass various formats of containers that can be relatively soft or flexible, such as pods, and made of any material, recyclable or non-recyclable, biodegradable or non-biodegradable, such as aluminium, plastic, filter paper.

One problem encountered with the systems extracting beverages from said pods is the handling of the pod in an extraction device, specifically the closing of the chamber around the pod to perform the extraction process and then the proper ejection of the pod from the chamber. The pod usually has to be positioned by the user in a housing, then the device is closed manually or automatically around the pod.

It is important to correctly position the pod so that the device closes properly around the latter and to form a good seal to ensure good conditions of extraction. Bad positioning may damage the pod, and thus affect the conditions of extraction. The loading must also be as rapid as possible and not require excessive manipulations.

Finally, at the end of the beverage preparation, the pod shall be easily ejected without risk of false orientation and machine blocking. EP 1767129 discloses a beverage producing device comprising a first jaw member and a cooperating second jaw member that in a closed state are in tight contact enclosing a capsule, and a capsule detaching unit with an annular member that rotates to engage with the outer rim of the capsule and detach it from the device.

EP 1859714 and WO 2013/026844 describe beverage preparation systems and means to handle soft or flexible pods inside the extraction device. These pods present specific characteristics:
- the pods are made of aluminium or plastic materials,
- the pods present a symmetrical shape relatively to the plane comprising the flange of the pod,
- the pods always present the same shape, dimension and volume and the extraction chamber is designed for receiving this single type of pod shape.

WO 2020/089404 describes another system extracting beverages from soft or flexible pods presenting other characteristics :
- the pods present asymmetrical shape relatively to the plane comprising the flange of the pod,
- different pods presenting different shapes and volumes can be used and the extraction chamber is designed for receiving these different pods.

The extraction device is provided with an extraction chamber configured to adapt its size to the shape and volume of the pod introduced.

Due to the asymmetrical shape and the use of different sizes of pods, the extraction devices of the precedent cited systems designed for single size of symmetrical pods cannot be used.

In addition, in order to respect environment, it is required today to use pods made of biodegradable and/or compostable materials, in particular essentially made of paper. These new materials lead to particular properties and consequently to specific problems during the beverage preparation and the handling of the pod in the extraction device.

In particular, the paper nature of the pod can make the properties of the pod very different between the moment it is inserted inside the extraction device and the moment it is ejected therefrom that is after liquid was introduced inside the cage. The dry pod does not present the same mechanical properties as the wet pod.

Whereas the material is rigid when its is dry, it becomes extremely soft when it is wet. As a result, handling the pod before the injection of liquid is different from the manner to handle the pod after the injection of liquid. In particular, once it is wet, the handling is much more difficult because the material is so soft that it is difficult to push it and eject it from the extraction device. Some parts of the pod become fragile and the risk of tearing or opening the pod is increased with the result of dirtying the internal parts of the machine.

An object of the invention is to address at least the above existing problems.

### Summary of the invention

In a first aspect of the invention, there is provided a device for extracting a beverage ingredient by supplying an extraction liquid such as heated water into in a pod,
said pod comprising :
   - a pod body, said pod body comprising :
      - a side wall and a bottom wall defining a chamber, said chamber extending axially between the bottom and a top end of the sidewall, said top end defining a top opening,
      - a circumferential annular flange projecting radially outward from the top end of the side wall, said flange comprising a top surface opposite to the chamber with respect to the opening,
      said pod body containing a beverage ingredient,
      and
   - a plane top lid attached to the top surface of the circumferential flange, said plane top lid closing the top opening of the pod body,
      and
said device comprising :
   - upstream and downstream pod enclosing parts relatively translatable along a longitudinal axis (XX') between an open position for inserting and/or ejecting the pod and a closed position for forming an extraction chamber enclosing the pod during extraction,
   - the upstream part defining a cage for enclosing the pod body and bearing :
      . an upstream piercing arrangement for opening the bottom wall of the pod body and
      . a liquid injector, and
   - the downstream part defining a plate transverse to the longitudinal axis (XX'), said plate comprising :
      . a fixed downstream plane piercing arrangement for opening the lid of the pod, and
      . a peripheral area, said peripheral surrounding the fixed downstream plane piercing arrangement
      and
   - an insertion section for inserting the pod in the device, said insertion section being designed to position the pod with the plane top lid facing the downstream piercing arrangement, and wherein, in the closed position :
   - the central part of the peripheral area of the downstream enclosing part, the downstream plane piercing arrangement and the cage of the upstream enclosing part form the extraction chamber, and
   - the edge of the opened end of the cage defined by the upstream enclosing part faces and contact the central part of the peripheral area of the downstream enclosing part, and
wherein the peripheral area of the downstream enclosing part is able to pivot around an axis (YY'), said axis being transversal to the longitudinal axis (XX') and positioned at the bottom of the downstream enclosing part, the peripheral area being able to pivot in the direction of the upstream enclosing part.

The invention relates to a device for extracting a beverage ingredient typically comprised in a beverage preparation machine configured for receiving pods. For instance, the machine is a coffee, tea, chocolate or soup preparation machine, preferably a coffee machine. In particular, the machine is arranged for preparing within the extraction chamber a beverage by passing water, preferably hot, or another liquid through a pod containing an ingredient of the beverage to be prepared, such as roasted ground coffee or tea leaves or instant coffee or instant tea or chocolate or cacao or milk powder or dehydrated soup. In the preferred embodiment, the beverage ingredient is roasted and ground coffee.

The device is configured for extracting a beverage ingredient contained in a pod by supplying an extraction liquid such as water into the pod. The device comprises upstream and downstream pod enclosing parts relatively movable between an open position for inserting and/or ejecting such pod and a closed position for forming an extraction chamber enclosing the pod during beverage ingredient extraction.

Typically, the pod can be inserted into the device from above under the effect of gravity. Ejection or removal of the pod upon reopening of the enclosing parts may also be driven by gravity.

The upstream and downstream pod enclosing parts are relatively translatable along a longitudinal axis (XX') between an open position for inserting and/or ejecting the pod and a closed position for forming an extraction chamber enclosing the pod during extraction.

The upstream part defines an empty cage or cavity for enclosing the pod body and comprises an upstream piercing arrangement in the form of one or more piercers for piercing the bottom wall of the inserted pod and at least one liquid injector for supplying liquid through the pierced bottom wall of the pod.

This upstream piercing arrangement can comprise piercers in the form of blades. These blades ca be designed and positioned to pierce the wall of the bottom of the pod body when the upstream and downstream pod enclosing parts are brought to the closed position. The liquid injector, such as a shower at the upstream part of the cage, can introduce the extracting liquid through the pre-pierced openings.

In an alternative, this upstream piercing arrangement can comprise at least one hollow needle configured to pierce the wall of the bottom of the pod body and hollow needle(s) can comprise an internal axial channel for guiding the extracting liquid in the chamber of the pod body.

The downstream part defines a plate transverse to the longitudinal axis. Accordingly, this plate extends along a plane that is perpendicular to the longitudinal axis XX'. This plate of the downstream part comprises a downstream plane piercing arrangement for opening the lid of the pod when the extracting liquid is introduced inside the pod. This downstream piercing arrangement is fixed, that is to say not movable. Usually, this downstream plane piercing arrangement is designed for opening the lid by relative engagement with the lid under the effect of the rise in pressure of the injected liquid in the pod body chamber and inflation of the lid against the piercing arrangement. This downstream plane piercing arrangement may comprise a rigid plate comprising opening elements such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

In addition, the plate of the downstream part comprises a peripheral area that extends around the whole periphery of the downstream plane piercing arrangement except during pod ejection as mentioned below. Consequently, except during pod ejection, this peripheral area extends in the same plane as the downstream plane piercing arrangement. Generally, the peripheral area is essentially plane to interact with the plane top lid of the pod.

The device comprises an insertion section for inserting the pod in the device. Generally, this section is positioned above the upstream and downstream pod enclosing parts so that the pod is inserted by gravity between these two parts. This insertion section is designed so that the user is urged to position the pod with its lid facing the downstream piercing arrangement.

Preferably, this insertion section can comprise a recognition device to recognise or identify the pod that is introduced inside the extraction device. The recognition device can comprise :
- a pod temporary blocking means to block the pod in a temporary recognition position, and
- a device to recognise the pod blocked in this temporary recognition position.

The recognition device is configured to enable the pod temporary blocking means to let the pod fall to the pod holder of the extraction device once the pod has been recognised.

In the closed position of the downstream and upstream enclosing parts, the central part of the peripheral area of the downstream enclosing part, the downstream plane piercing arrangement and the cage of the upstream enclosing part form the extraction chamber.

Accordingly, when a pod is present, the pod body is surrounded by the cage of the upstream part and the pod lid extends along both the peripheral area of the downstream enclosing part and the downstream plane piercing arrangement.

The cage of the upstream enclosing part and the central part of the peripheral area of the downstream enclosing part are designed so that the periphery of the opened end of the cage faces the central part of the peripheral area. As a result, when a pod is enclosed inside the two enclosing parts, which are positioned in the closed position, then the central part of the peripheral area faces and supports the circumference of the top edge of the sidewall of the pod body. Consequently, this central part of the peripheral area supports a part of the pod that is more rigid than the flange of the pod, particularly when an aqueous liquid was introduced in the pod and the material of pod is wetted and becomes soft.

In addition, the peripheral area of the downstream enclosing part is able to pivot around a bottom transversal axis (YY') and in the upstream direction.

Accordingly, during the operation of ejection of the pod where the upstream enclosing part is moved away from the downstream enclosing part, the peripheral area of the downstream enclosing part can be pivoted around this bottom transversal axis (YY') and can push the pod away from the fixed downstream piercing arrangement, which helps the ejection of the pod from the extraction device

This pivoting movement happens at the end of the beverage preparation extraction and when the two enclosing parts are moved to the open position.

During this pivoting movement, the pivoting central area of the peripheral area pushes the circumference of the top edge of the sidewall of the pod body. Even if the wet pod has become soft, pushing this part of the pod rather than the flange of the pod, that is thin compared to the sidewall of the pod taken along its axial direction, provides a better support to push the whole pod and guarantees that the peripheral area does not tear the lid in the area of the flange only with the effect of not entraining the pod (the flange being totally soft and flexible) or of pivoting and entraining the flange only and leaving the central part of the lid attached to the downstream piercing arrangement since the wet and soft material of the pod often sticks to the downstream piercing arrangement in particular its spikes. By pushing the annular area of the lid that faces the sidewall, the risk of tearing and opening the pod in this area is reduced and the ejection is ensured.

Usually, the downstream plane piercing arrangement is circular and the central part of the peripheral area of the downstream enclosing part forms an annular area.

Preferably, the upstream pod enclosing part comprises pulling means configured to engage with upper parts of the peripheral area of the downstream enclosing part, when the upstream pod enclosing part is moved from the closed position to an open position for ejecting the pod. Accordingly, the ejection of the pod is automatically facilitated by the movement of the upstream enclosing part.

Usually, the device comprises a pod holder attached to the peripheral area of the downstream part. While being attached, that is to say supported by the peripheral area, the pod holder can be moved between two positions :
- a first receiving position for receiving and holding the lid of the pod in front of the downstream plane piercing arrangement, and
- a second retracted position at the lateral sides of the downstream plane piercing arrangement.

Usually in the receiving position of the pod holder, these elements retain the pod vertically or slightly inclined versus vertical and position the pod in front of the downstream plane piercing arrangement.

Each of these pair of elements of the pod holder can comprises a lower holding surface and a transverse arc-shaped ridge.

Such a pair of elements are configured so that in their receiving position :
- the lower holding surfaces of these elements retain the pod vertically as it falls by gravity inside the device from the insertion section in between the two enclosing parts. These lower holding surfaces are positioned so that the lid of the pod is aligned with the downstream piercing arrangement.
- the transverse arc-shaped ridges retain the pod longitudinally so that the lid of the pod remains essentially parallel or slightly inclined away from the downstream plane piercing arrangement. Preferably, these ridges extend in a transverse plane that is slightly inclined relative to the plane of the downstream plane piercing arrangement, the lower parts of the elements being closer to the downstream part than the upper parts. This inclination provides a larger upper space for the insertion of the pod from the insertion section down to the pod holder and limits the risk of wrong road for the pod. Due to the fact that the pod presents asymmetrical shape versus the plane of the lid, the pod cannot stand in a balanced position when its lid is vertically oriented and even less when the height of the pod is the largest one since its centre of gravity lies in the middle of the pod body.

This inclination provides the additional advantage of limiting the movement of the pod inside the pair of elements when they are moved from the receiving to the retracted position since during said movement, the path of movement of the part of the pod laying on the lower holding surfaces is kept very short.

The transverse arc-shaped ridges can extend in a transverse plane that is inclined by few degrees relatively to the plane of the plane piercing arrangement.

Generally, the elements of the pair present symmetric shapes versus the vertical plane comprising the longitudinal axis XX' extending through the centre of the downstream piercing arrangement.

The pair of retaining and positioning elements can be configured to be movable between two positions depending on the status of the operation of the extracting device :
- in the status of insertion of a new pod, the pair of retaining and positioning elements is in a receiving position for receiving and holding the pod. The pair of elements retain the pod in front of the downstream plane piercing arrangement. The pair of elements extend in front of the downstream part, in particular in front of the peripheral area of the downstream part. The pair of transverse arc-shaped ridges are preferably inclined relative to the plane of the downstream plane piercing arrangement.
- in the status of extraction of the pod (that is introduction of liquid in the pod), the pair of elements are in a retracted position at the lateral sides of the downstream plane piercing arrangement.

In addition, the pair of retaining and positioning elements are pushable from the receiving position to the retracted position by the upstream enclosing part when said upstream enclosing part is translated longitudinally from the open position to the closed position.

Consequently, depending on the operation step implemented in the extraction device, the pair of retaining and positioning elements are able either to interact with the pod by retaining it or to stop any interaction with the pod which can interact freely with the cage or can be ejected.

Preferably, the pod holder is able to be locked in the peripheral area of the downstream enclosing part and to remain locked until the operation of ejection of the pod is finished, preferably until a new pod is introduced in the insertion section.

By locking the pod holder in the peripheral area during the complete operation of ejection of the pod, there is no risk that the pair of retaining and positioning elements move during the movement of the upstream pod enclosing part back to the open position, and then no risk that at least one of the pair of retaining and positioning elements pinch or retain the flange of the extracted pod while the cage progressively liberates the extracted pod.

Preferably, the retaining and positioning elements move from the receiving position to the retracted position along diverging directions.

By "diverging directions", it is meant that the directions followed by the first retaining and positioning element and the second retaining and positioning element are not parallel and that the distance between these elements is greater in the retracted position than in the receiving position.

Consequently, in the receiving position, the pair of retaining and positioning elements define an intermediate space that is sized to retain at least the smaller pods, that is the pods presenting the smallest diameters due to the inconsistent manufacturing. When these elements are pushed by the upstream enclosing part from this receiving position to the retracted position, the diverging directions cause the space between these elements to increase which guarantees :
- that the flanges of the pods presenting the biggest diameters do not remain pinched by these elements in the retracted position, and
- that the upstream enclosing part is able to lean on the downstream enclosing part for forming the extraction chamber in an homogeneous manner all along the periphery of the pod flange.

A flange that would be partially pinched in one of the retaining and positioning elements during the movement the closure of the chamber would lead to inequal closure, liquid leaking, impossibility to get pressure increase and correct extraction of the pod.

The risk of pinching is particularly increased with pods presenting inconsistent diameter even if the tolerance is small.

The diverging directions of the elements during movement to the retracted position avoid the risk of pinching.

Generally, when the retaining and positioning elements move from the receiving position to the retracted position, these elements can diverge transversally by a dimension corresponding to the tolerance about the diameters of the manufactured pods. For example, for a tolerance of more or less 1 mm, each element can diverge transversally by at least 0.5 mm, preferably 1 mm during the movement of the retaining elements from the receiving position to the retracted position.

Preferably, the pod holder comprises guiding parts that are configured to guide the movements of the retaining and positioning elements between the retaining position and the retracted position. These guiding parts can comprise slopes oriented to slide along surfaces of the peripheral area of the downstream enclosing part according to diverging directions.

Preferably, the side of the upstream enclosing part facing the downstream enclosing part comprises rising elements configured to push the pair of retaining and positioning elements during the longitudinal translation of the upstream enclosing part from the open position to the closed position.

Preferably, the opened end of the cage defined by the upstream enclosing is covered by a seal and this seal comprises a ridge configured to press the flange of the pod against the peripheral area of the plate of the downstream part.

Accordingly, the flange of the pod is pinched between the seal and the peripheral area of the downstream enclosing part strongly. The paths for liquid due to the presence of wrinkles around the flange of the pod are closed by the engagement of the seal.

Even more preferably, the peripheral area of the downstream enclosing part comprises a groove conformal to the shape of the ridge of the seal.

In a second aspect of the invention, there is provided a beverage preparation machine comprising an extraction device such as described above.

Generally, this beverage machine comprises a liquid supply system connected to the upstream enclosing part. This liquid supply system can comprise :
- a liquid supply such as a liquid tank,
- pumping means to drive liquid form the liquid supply to the extraction device,
- heating and/or cooling means to adapt the temperature of the liquid before it is introduced inside the pod.

The liquid is usually water.

This beverage machine can comprise recognition means as mentioned above.

This beverage machine usually comprises a motor to actuate the movement of the enclosing parts of the extraction device

Usually, this beverage machine comprises a control unit configured to control the movement of the enclosing parts of the extraction device and the supply of liquid to the extraction device. The control unit can be configured to control the recognition operation of the recognition device if present or to display information to the user.

In a third aspect of the invention, there is provided a system comprising an extraction device such as described above and a pod or comprising a beverage preparation machine such as described above and a pod, wherein :
- the pod comprises :
   - a pod body, said pod body comprising :
      - a side wall and a bottom wall defining a chamber, said chamber extending axially between the bottom and a top opening,
      - a circumferential annular flange projecting radially outward from the top opening, said flange comprising an upper surface opposite to the chamber with respect to the opening,
      said pod body containing a beverage ingredient,
      and
   - a top lid attached to the upper surface of the circumferential flange, said top lid closing the top opening of the pod body,
   and
wherein, when the upstream and downstream enclosing parts are in the closed position, the central part of the peripheral area of the downstream enclosing part is designed to face or support the circumference of the top end of the sidewall of the pod body.

Preferably, the body and the lid of the pod are made of paper material.

The paper material provides the pod with biodegradable and/or compostable properties.

In one preferred embodiment, the paper material is a multilayer paper material comprising a layer of paper coated with at least a plastic film, preferably a compostable plastic film. This compostable plastic film can be a multilayer plastic film. This film can provide additional properties such as air barrier and sealants to avoid delamination.

Generally, the mechanical properties, such as the stiffness, of the dry paper material decreases when it is wetted. In particular, the elastic modulus of the paper material can become ten times less when it is wetted.

The paper material of the pod can present :
- an elastic modulus of at least 2000 MPa when dry and of less than 250 MPa when wet, and/or
- a tensile strength of at least 30 MPa when dry and less than 10 MPa when wet.

In a fourth aspect, there is provided the use of a pod for preparing a beverage in a device for extracting a beverage ingredient such as described above or with a beverage machine such as described above,
said pod comprising :
- a pod body, said pod body comprising :
   - a side wall and a bottom wall defining a chamber, said chamber extending axially between the bottom and a top end of the sidewall,
   - a circumferential annular body flange projecting radially outward from the top end of the sidewall, said body flange comprising a top face opposite to the chamber with respect to the opening,
   said pod body containing a beverage ingredient,
   and
- a top lid comprising a peripheral annular are attached to the top face of the body flange, said top lid closing the top opening of the pod body.

Preferably, the body and the lid of the pod are made of paper material.

The paper material provides the pod with biodegradable and/or compostable properties.

In one preferred embodiment, the paper material is a multilayer paper material comprising a layer of paper coated with at least a plastic film, preferably a compostable plastic film. This compostable plastic film can be a multilayer plastic film. This film can provide additional properties such as air barrier and sealants to avoid delamination.

Generally, the mechanical properties, such as the stiffness, of the dry paper material decreases when it is wetted. In particular, the elastic modulus of the paper material can become ten times less when it is wetted.

The paper material of the pod can present :
- an elastic modulus of at least 2000 MPa when dry and of less than 250 MPa when wet, and/or
- a tensile strength of at least 30 MPa when dry and less than 10 MPa when wet.

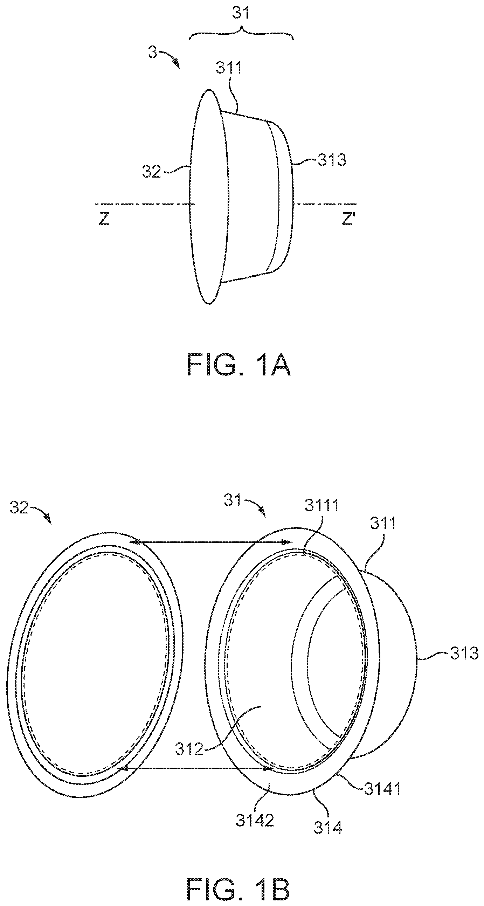

In the present application :
- the term "pod" is used to broadly designate any kind of single-dose container suitable for preparing beverages or other edible products such as capsule, cartridge, portioned or individual package without limitation to the shape of this container, in particular the shape of the body, or the types of piercing means needed to extract the beverage therefrom.
- the term "longitudinally" refers to the orientation of the two enclosing parts one to the other and their movement along the longitudinal axis XX'. Accordingly, the term "transversally" refers to the orientation that is transverse or perpendicular to that longitudinal orientation. Generally, the longitudinal and transverse orientations extend in a horizontal plane. The terms "lateral" is defined by reference to the vertical axis including the longitudinal axis XX'.
- the term "vertically" and "downwardly" refers to the movement of the pod in the extraction device from its introduction above the two enclosing parts to its ejection below the two enclosing parts. The terms "upper" and "lower" refer to this vertical axis too. The terms "top" and "bottom" refers to this vertical axis when an element of the extraction is considered.
- for the pod, the terms "top" and "bottom" are defined in accordance with the description of Figure 1A.
- the terms "upstream" and "downstream" refer to the path of liquid through the extraction device from the upstream enclosing part to the downstream enclosing part.

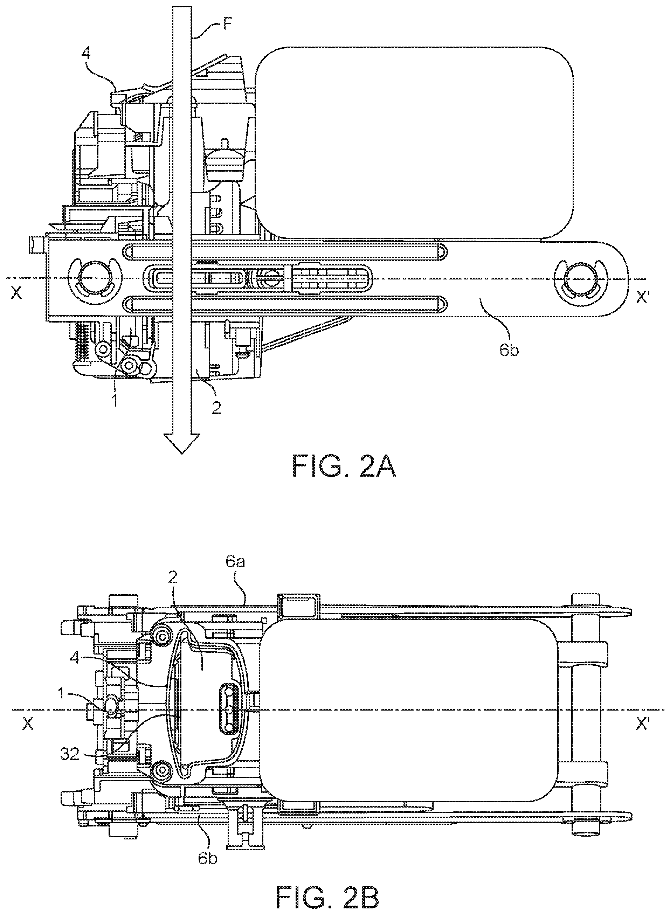

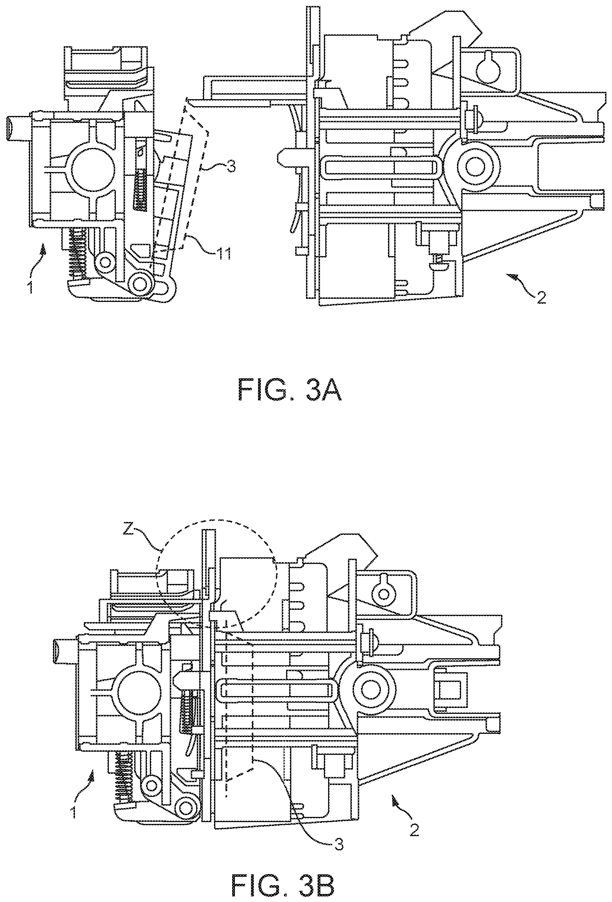

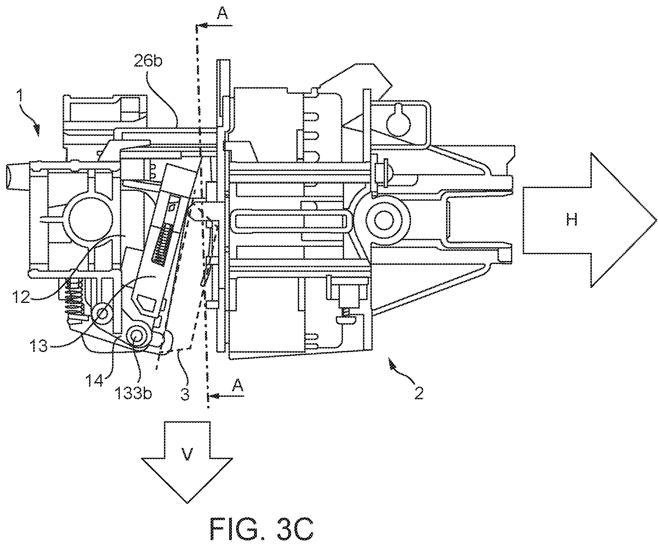

Generally, these terms are used to describe the relational positioning of features of the extraction device. These terms should be understood to refer to said device in its normal orientation when positioned in a beverage machine for the production of a beverage as shown in the figures 2A, 2B, 3A, 3B and 3C.

Further objects and advantageous features of the invention will be apparent from the claims, from the detailed description, and annexed drawings.

### Brief description of the drawings

Specific embodiments of the invention are now described further, by way of example, with reference to the following drawings in which :
- Figures 1A to 1C are different perspective view of pods used in the extraction device of the present invention,
- Figures 2A and 2B are side and top views of a device according to the present invention in the closed position,
- Figure 3A is an isolated side view of the upstream and downstream pod enclosing parts of a device according to the present invention in the opened position,
- Figure 3B is an isolated side view of the upstream and downstream pod enclosing parts of Figure 3A in the closed position,
- Figure 3C is an isolated side view of the upstream and downstream pod enclosing parts of Figure 3A in the position of ejection of the pod,
- Figure 4A is an isolated perspective view of the downstream pod enclosing part of Figure 3A,
- Figure 4B is an isolated perspective view of the downstream pod enclosing part of Figure 3B,
- Figure 4C is an isolated perspective view of the downstream pod enclosing part of Figure 3C,
- Figure 4D is a magnified view of a part of Figure 4C,
- Figure 5 is an isolated perspective view of the upstream pod enclosing part of Figures 3A and 3B,
- Figure 6 is a top view of Figure 3C.
- Figure 7 is a longitudinal cross section of the Figure 3B magnifying the area Z of interaction of the enclosing parts.

### Detailed description of exemplary embodiments

**Figures 1A** (perspective view) **and 1B** (exploded view) illustrate the pods 3, 3' that can be used in the extraction device of the invention.

The pod 3 comprises a pod body 31 with one sidewall 311 that extends axially from a bottom wall 313 towards a top. The sidewall 311 extends towards a top opening 312. At the top opening 312, the body comprises a circumferential annular flange 314 that extends radially outward from the sidewall 311 along the circumference of the opening 312.

The flange comprises a top surface 3142 facing the top and a bottom surface 3141.

Generally, any transversal cross section of the body is circular from the bottom to the top and the flange is circular too.

The body delimits a chamber for containing a beverage ingredient.

This beverage ingredient packed is preferably an ingredient able to be extracted like roast and ground coffee.

In a less preferred manner, the beverage ingredient can be tea leaves or a water soluble powder ingredient such as : instant coffee powder, milk powder, cream powder, instant tea powder, cocoa powder, soup powder, fruit powder or mixture of said powders or even a soluble liquid ingredient or a beverage concentrate such as a syrup or milk concentrate. The powders can be agglomerated or sintered.

The capsule comprises a plane lid 32 that is fixed, sealed or attached to at least a part of the top surface 3142 of the circumferential flange and accordingly covers and closes the top opening 312.

The bottom wall 313 is adapted to be pierced so that liquid can be injected in the pod through the pierced openings.

The lid 32 is adapted to be opened by relative engagement with a piercing arrangement under the effect of the liquid pressure increase inside the pod during injection of liquid.

The pod shape is symmetric relatively to the central axial axis ZZ' extending from the bottom wall to the lid and the pod shape is asymmetrical relatively to the plane of the lid and the flange.

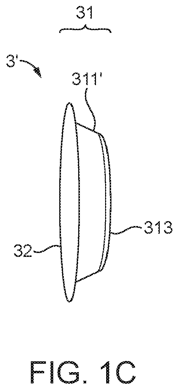

**Figure 1C** illustrates another pod 3' that can be used in the extraction device of the invention and differ from the pod 3 of Figure 1A only by the longitudinal size (along ZZ') of the pod bodies 31'. The pod body 31 of the big pod 3 defines an ingredient chamber with a bigger volume than the pod body 31' of the small pod 3', the side wall 311 being higher than the side wall 311'. The diameter of the lids 32, 32' of the small and big pods are identical.

This difference in sizes enable the preparation of different beverages, preferably different coffee beverages like ristretto, espresso, lungo (long cups), americano, ...

Other sizes than those illustrated can be provided, like an intermediate size.

When the pod comprises roast and ground coffee, quantities of coffee can range between 4 and 15 g. The axial dimension of the pod can extend from 5 mm to 30 mm for a same diameter of the body of about 53 mm.

Preferably the pods 3 are essentially made of a biodegradable or compostable material, preferably a home compostable material since extracted coffee cakes can easily be made composted at home.

Preferably, the material of the pod comprises a paper layer. This paper layer is formable, i.e. a sheet of paper can be given a three-dimensional shape that is the form of the body of the above described pod. Contrary to common pods made of filter paper, this paper is thick and keep the three-dimensional shape provided during a shaping step of manufacturing of the pod.

Preferably, the paper layer of the pod can have a grammage of at least 20 g/m², preferably at most 150 g/m². The paper of the body can present a higher grammage than the paper of the lid because it needs to be stretched and deformed during manufacturing.

The grammage of the paper of the body can be comprised between 80 and 150 g/m².

The lid can present a grammage comprised between 20 and 120 g/m².

Both papers can present a grammage of about 100 g/m².

The material of the pod can comprise a layer of paper and some other materials to provide additional properties such as air barrier, stretchable or deformable properties. These additional properties can be provided with at least one plastic layer, for example as described in WO 2020/114995. Some additional layers of the body and of the lid can be different.

In fact, in order to shape the paper as a container for the beverage and to create a barrier to protect the beverage ingredient, the paper must be sufficiently thick. In addition, to create a barrier to atmosphere, in particular oxygen to which roast and ground coffee is particularly sensitive, the layer of paper is preferably coated with a compostable plastic film. Sealants layers are often necessary to attach the different layers and prevent delamination. For example, such a multilayer paper material can be the material described in WO 2020/114995 or in WO2022/022899.

With such pod materials, the thickness of the multilayer paper material of the body can be about 200 µm and the thickness of the multilayer paper material of the lid can be about 140 µm which means that the thickness of the flange is usually greater than 200 µm, even greater than 300 µm.

The manufacturing of the pods comprises generally the steps of :
- providing a first sheet of deformable paper material of circular shape, the diameter of said first sheet being adapted to the size of pod to be produced (small or big),
- deforming said first sheet in order to shape the pod body with a flange therefrom. this operation is usually obtained by shaping the first sheet in a dedicated recess, die or mould that presents the shape of the pod body.
- filling the shaped body with a dose of beverage ingredient, preferably roast and ground coffee, and preferably compacting said dose of roast and ground coffee inside the shaped pod,
- providing a second sheet of material of circular shape, the diameter of said second sheet corresponding to the diameter of the lid of the pod, whatever the size of the pod to be produced (small or big),
- sealing this second sheet on the flange of the filled shaped body.

The particular nature of the paper implies that the mechanical properties of the pod change before liquid, such as water, is introduced inside the cage and inside the pod and when the pod is filled with water. Once wet, the paper material loses its rigidity, becomes soft and easily tearable. Consequently, the handling of this pod is totally different between the step of introducing a new non-extracted pod inside the extraction device and the step of ejecting the wet and soft extracted pod from the extraction device. In particular, it was observed that the elastic modulus of the paper material can decrease considerably when it was wetted.

Tests about the stiffness properties of multilayer paper materials were realised. These multilayer paper materials presented at least one layer of paper and a compostable plastic film such as described in WO 2020/114995. The elastic modulus and the tensile strength of these materials were measured at 90°C (temperature in the chamber of the apparatus used for the elastic modulus measure) according to the standard method ASTM D882 either on the dry material or on the wet material after 30 seconds soaking in hot water.

It was observed that these paper materials presented :
- an elastic modulus of at least 2000 MPa when dry and inferior to 250 MPa when wet, and/or
- a tensile strength of at least 30 MPa when dry and inferior to 10 MPa when wet.

These differences of measure quantify the strong difference of rigidity of the pods between the dry state and wet state.

**Figure 2A** is a side view of an extraction device according to the invention comprising an upstream pod enclosing part 2 and a downstream pod enclosing part 1 relatively translatable along a longitudinal axis XX'. Usually, this axis XX' is essentially horizontal. In Figure 2A, these two parts are in a closed position and form an extraction chamber configured to enclose a pod during extraction. The pod is introduced through an insertion section 4 positioned above the two enclosing parts 1, 2, from which it can fall by gravity to these two enclosing parts 1, 2. After extraction, the pod can fall by gravity again below these two enclosing parts 1, 2 when they move apart one from the other. The arrow F illustrates the movement of the pod from the insertion inside the extraction device to the ejection from said device.

The two pod enclosing parts 1, 2 are hold and movable between two lateral and longitudinal metal sheets 6a, 6b. At least one of these parts is movable in translation between these two sheets in order to assess different relative and functional positions. In the preferred illustrated embodiments the downstream enclosing part 1 is fixed and only the upstream enclosing part 2 is movable back and forth along the longitudinal axis XX'.

**Figure 2B** is a top view of the extraction device in the same relative positions of the upstream pod enclosing part 2 and the downstream pod enclosing part 1. The insertion section 4, in particular its housing, is designed to enable the introduction of the pod 2 with its lid 32 facing the downstream pod enclosing part 1 and accordingly the piercing arrangement 12 of said enclosing part as developed below. Consequently, the user is urged to position correctly the asymmetric pod 3 inside the extraction device.

Preferably, this insertion section 4 can comprise a recognition device to recognise or identify the pod 2 that is introduced inside the extraction device. The recognition device can comprise
- a pod temporary blocking means to block the pod in a temporary recognition position, and
- a device to recognise the pod blocked in this temporary recognition position.

The recognition device is configured to enable the pod temporary blocking means to let the pod fall to the pod holder of the extraction device once the pod has been recognised.

**Figures 3A and 3B** are isolated side views of the upstream and downstream pod enclosing parts 1, 2 of the extraction device of Figures 2A, 2B in different relative and functional positions. In these isolated views, the insertion section 4 and the longitudinal sheets 6a, 6b were removed for a better vision of the different elements of the parts 1, 2 . In addition, the position of the pod 3 is schematically illustrated in dotted lines.

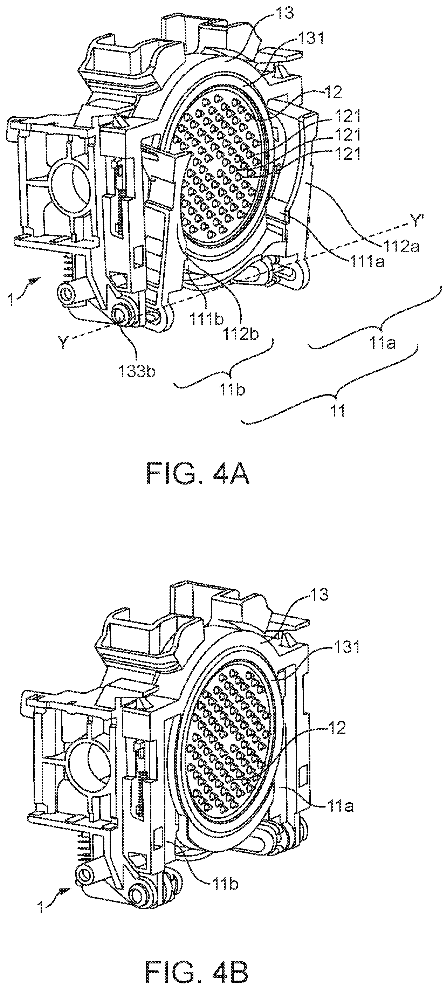

In **Figure 3A****,** the upstream and downstream pod enclosing parts 1, 2 are positioned in the open position for inserting a pod from the upper side. A pod holder 11 is visible in front of the downstream pod enclosing part 1 in a receiving position for receiving and holding the pod as further described below in relation with Figure 4A.

In **Figure 3B****,** the upstream and downstream pod enclosing parts 1, 2 are positioned in the closed position and form an extraction chamber enclosing a pod during extraction. In that position, the pod holder 11 is in a retracted position as further described below in relation with Figure 4B.

**Figure 4A** is an isolated perspective view of the downstream pod enclosing part 2 of Figure 3A. The downstream part 1 defines a plate perpendicular (that is transverse) to the longitudinal axis XX'. This plate comprises a fixed central downstream plane piercing arrangement 12 for opening the lid 32 of the pod when the extracting liquid is introduced inside the pod and inflates the lid..

Usually, this central downstream plane piercing arrangement 12 is circular like the lid of the pod.

Opening happens by relative engagement of spikes with the lid under the effect of the rise in pressure of the injected liquid in the pod body chamber. This downstream plane piercing arrangement may comprise a rigid plate comprising opening elements 121 such as spikes, that can present the shape of cones or pyramids, optionally truncated at their ends, on its surface turned to the lid. In addition, the plate comprises traversing holes to evacuate the beverage dispensed from the opened lid to a tube or nozzle collecting and dispensing beverage to a drinking cup.

In addition, the plate comprises a peripheral area 13 surrounding that piercing arrangement 12.

The downstream part 1 comprises a pod holder 11 that is attached to the peripheral area 13. While being attached the pod holder can be moved between two positions. In Figure 4A, the pod holder 11 is in the first position for receiving and holding the lid of the pod in front of the downstream plane piercing arrangement.

The pod holder 11 comprises a pair of elements 11a, 11b that retain and position the pod when this pair is in the first receiving position. In this position of the pod holder, these elements retain vertically the pod, that is they stop the vertical fall of the pod falling from the insertion position. In addition, in this position, these elements position the lid of the pod in front of the downstream plane piercing arrangement 12, that is these elements align or centre the lid of the pod with the downstream plane piercing arrangement 12. Actually, due to the asymmetric shape of the pod, the centre of gravity of the pod is placed outside the plane of the lid and the introduced pod tips over in the space between the two enclosing parts if it is not retained longitudinally too.

Usually each of said elements of the pair comprises :
- a lower holding surface 111a, 111b that retain the pod vertically as it falls by gravity inside the device from the insertion section in between the two enclosing parts. This lower holding surface is positioned so that the lid of the pod is aligned with the downstream piercing arrangement,
   and
- a transverse arc-shaped ridge 112a, 112b that retain the pod longitudinally so that the lid of the pod remains essentially parallel or slightly inclined relatively to the downstream plane piercing arrangement 12. Preferably, these ridges extend in a transverse plane that is slightly inclined relative to the plane of the downstream plane piercing arrangement, this latest one being usually essentially vertical. This inclination provides a larger space for the insertion of the pod from the insertion section down to the pod holder and limits the risk of wrong road for the pod. Due to the fact that the pod presents asymmetrical shape versus the plane of the lid, the pod cannot stand in a balanced position when its lid is vertically oriented and even less when the size of the pod is largest one since its centre of gravity lies in the middle of the pod body. The transverse arc-shaped ridges can extend in a transverse plane that can be inclined relatively to the plane of the downstream plane piercing arrangement.

In the preferred illustrated embodiment, the retaining elements are attached to the bottom of the peripheral area 13 of the downstream plate piercing arrangement in a manner that enables the retaining elements to pivot around a transversal axis YY'. Accordingly, the retaining elements can move from their inclined position to a position in alignment with the plane of the plate defined by the downstream part, that is in retracted position.

Usually the pair of elements 11a, 11b present symmetric shapes along the central vertical plane comprising the longitudinal axis XX'.

The pair of retaining elements 11a, 11b are movable from the receiving position to a second retracted position at the lateral sides of the downstream plane piercing arrangement as illustrated in **Figure 4B** that is an isolated perspective view of the downstream pod enclosing part 2 of Figure 3B. In this situation, the pair of retaining and positioning elements 11a, 11b have been pushed from the receiving position to the retracted position by the upstream enclosing part 2 when said upstream enclosing part is being translated longitudinally from the open position to the closed position.

During this movement of the retaining elements 11a, 11b from the receiving position to the retracted position, the retaining elements are progressively moved to a position where they are aligned on the lateral sides of the downstream plane piercing arrangement 12. In the specific illustrated embodiment, the retaining elements are progressively moved to the downstream plane piercing arrangement 12.

During this movement of the retaining elements, the pod is moved from a position where its lid 32 is slightly inclined versus the plane of the piercing arrangement 12 to a position where the lid 32 extends along said plane. During this movement, the retaining elements 11a, 11b passes from the side of the bottom face 3142 of the flange of the pod to the side of the top face 3141 of the flange of the pod. During this movement, the flange 314 of the pod is successively pressed, curved and then released by the retaining elements 11a, 11b.

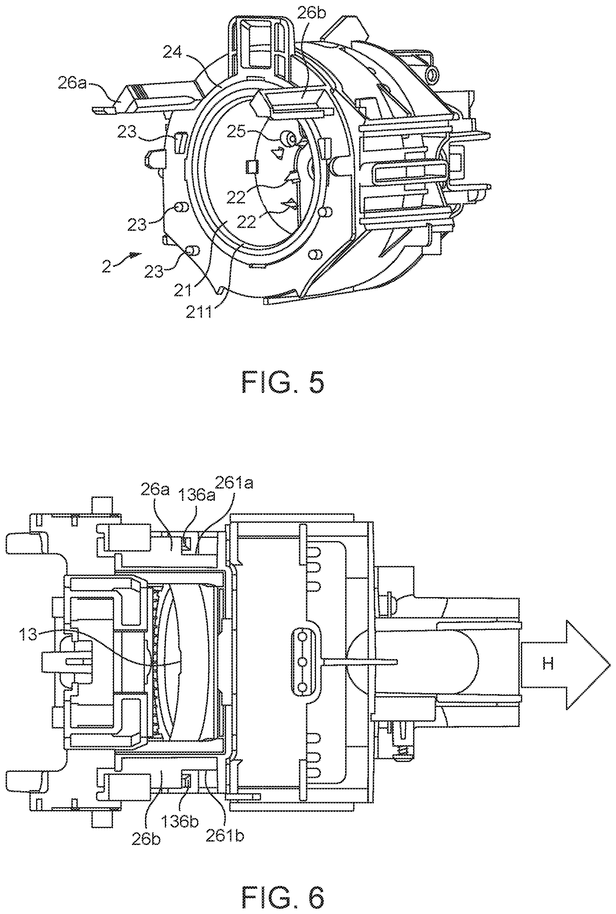

**Figure 5** is an isolated perspective view of the upstream pod enclosing part 2 of Figures 3A and 3B.

The upstream part defines an empty cage or cavity 21 for enclosing the pod body.

The upstream wall of the cage bears an upstream piercing arrangement 22 for opening the bottom wall 313 of the pod body. The upstream wall comprises at least one liquid injector 25 for supplying liquid into the pod through the holes opened in the bottom wall of the pod.

This upstream piercing arrangement can comprise piercers in the form of blades. These blades can be designed and positioned to pierce the wall of the bottom of the pod body when the upstream and downstream pod enclosing parts are brought to the closed position as in Figure 3B. The liquid injector 25, such as a shower at the upstream wall of the cage, can introduce the extracting liquid in the cage and through the pre-pierced openings.

Since pods 3 of different sizes can be introduced and extracted, the bottom of the cage 21 can be made movable to adapt the cage internal volume to the pod, for example as described in WO 2020/089404.

Preferably, the edge 211 of the upstream opened face of the cage is surrounded by a seal 24 to ensure tightness of the chamber formed by the two parts 1, 2 in the closed position. This seal 24 covers the periphery of the edge of the of the opened face of the cage.

Preferably, the upstream enclosing part 2 comprises two longitudinal protrusions 26a, 26b extending at the downstream face of the upstream pod enclosing part, of which function is described below. Preferably, each of these two longitudinal protrusions 26a, 26b present a respective indentation 261a, 261b (as illustrated in Figure 6).

The edge 211 of the upstream opened face of the cage faces the central part 131 of the peripheral area of the downstream enclosing part.

The downstream side of the upstream enclosing part can comprise rising elements 23 configured to push the pair of retaining and positioning elements 11a, 11b during the longitudinal translation of the upstream enclosing part from the open position to the closed position. These rising elements 23 are positioned to contact different parts of the retaining and positioning elements from the top to the bottom of said retaining and positioning elements in order to guarantee a progressive and homogeneous movement of these elements 11a, 11b to their retracted position.

Preferably, each of the retaining and positioning elements 11a, 11b can be locked in the retracted position during the extraction of the pod and during the ejection of the pod.

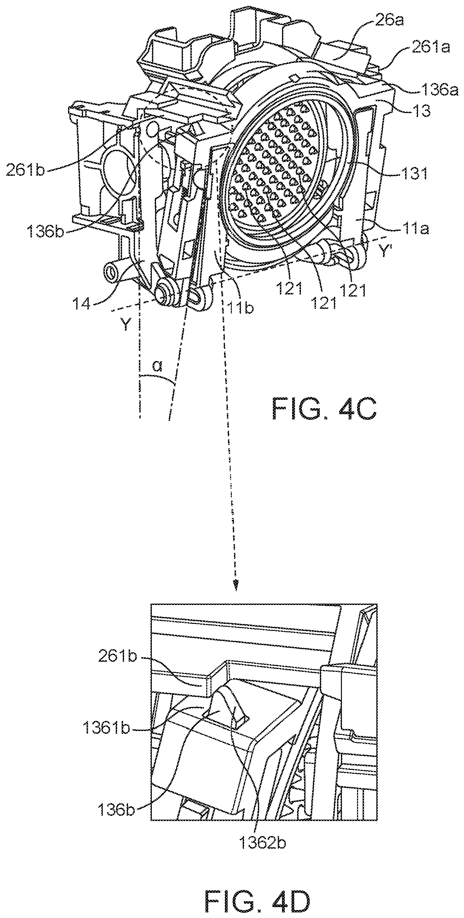

**Figure 3C** illustrates the moment where the upstream pod enclosing part 2 is being moving from the closed position of Figure 3B to a pod ejection position as showed by arrow H. At that moment, the peripheral area 13 of the downstream enclosing part is pulled by the upstream enclosing part 2 and made pivoted around the shafts 133a, 133b oriented along the transversal axis YY' and attached to the chassis 14 of the downstream enclosing part. This pivoting movement leads to an inclination of the peripheral area 13 which forces the ejection of the extracted pod 2 as illustrated by the arrow V. This pulling effect is obtained by the cooperation between :
- the two longitudinal protrusions 26a, 26b extending at the downstream face of the upstream pod enclosing part, and
- two corresponding pins 136a, 136b at the upper side of the peripheral area 13,
as illustrated in **Figure 6****,** top view of Figure 3C, and in **Figure 4C****,** isolated view of the downstream enclosing part 1.

**Figure 4D** is a magnified view of one pair 261b, 136b of these interacting protrusions and pins : the downstream side 1361b of the pin is designed so that the edge 261b of the indentation pushes said pin to the upstream direction. Consequently, the whole peripheral area 13 is pushed simultaneously and is pivoted around the bottom shafts 133a, 133b to which it is attached. Figure 4C shows the angle α of inclination of the peripheral area plane compared to its original orientation along the chassis 14. In the illustrated embodiment, this angle represents few degrees. This angle can vary with the dimensions and the construction of the two enclosing parts.

The whole peripheral area 13 is pivoted, while the central piercing arrangement 12 remains fixed and immobile. This movement of the peripheral area and of the pod away from the piercing arrangement 12 guarantees that the extracted pod 2 is effectively ejected and does not remain partly attached to the spikes 121 of the piercing arrangement. Actually, when a pod made of a compostable paper material is used, the properties of such material change after it has been contacted by liquid like water. In particular, when in contact with aqueous liquid, the material of the lid retains liquid, inflates, goes soft, which makes it closely attached to the downstream piercing arrangement such as the spikes 121 of the piercing arrangement.

As a result, the simple return of the upstream enclosing part 2 to the opened position is not sufficient to guarantee the ejection of the pod from the extraction device.

The inclination of the peripheral area helps the ejection by inclining the pod downwardly and away from the piercing arrangement 12. This orientation of the pod helps its ejection since, due to its asymmetrical shape, its centre of gravity pulls its down and out of the downstream piercing arrangement in particular the spikes 121.

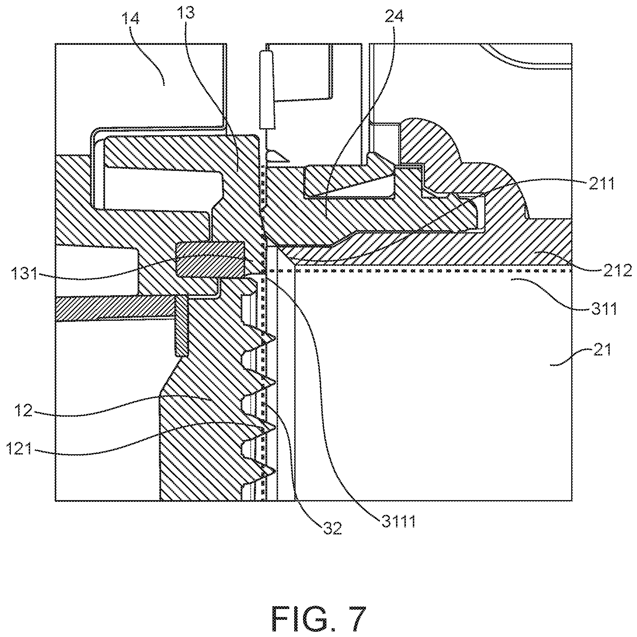

In addition, the inclinable peripheral area 13 comprises a central part 131 that forms part of the extraction chamber when the upstream and downstream pod enclosing parts 1, 2 are in the closed position as illustrated in **Figure 7****,** and the edge 211 of the opened end of the cage faces and leans on this central part 131 of the peripheral area of the downstream enclosing part.

When a pod 3 is in the closed extraction device like in Figure 3B or as illustrated in black dotted lines in Figure 7, the sidewall 311 of the pod extends along the internal sidewall 212 of the cage while the lid 32 extends along the piercing arrangement 12. Due to the configuration of the extraction device, it results that the top end 3111 of the sidewall faces the central part 131 of the peripheral area of the downstream enclosing part.

Consequently, during the ejection movement, this annular central part 131 does not support and does not push the flange 314 of the pod but does push, through the lid, the circumference of the top end of the sidewall 311, that is a thick area of the pod material. The change in the properties of the compostable material of the pod comprise the stiffness of the material. It was observed that once wet, the material becomes easily tearable. As a result, if the peripheral area 13 pushes the flange 314 of the extracted pod only, the risk this flange is torn and the central part of the lid remains attached to the spikes of the piercing arrangement is important with the two undesired consequences that the pod is not ejected and part of the extracted beverage ingredient, like a coffee cake, goes out of the pod and dirties the internal parts of the extraction device.

By making this annular central part 131 of the peripheral area part of the brewing chamber and inclinable with peripheral area, the risk of tearing is avoided and efficient and proper ejection of the pod is obtained.

Preferably the width of the annular central part 131 can be of few mm.

Preferably, the pivotable peripheral area 13 it is pulled and pivoted by the upstream closing part and is spring loaded so that when the upstream closing part releases the pivotable peripheral area, the latter automatically comes back to its position around the downstream piercing arrangement 12 such as illustrated in Figure 4B.

In general, the extraction device is configured for ejecting the pod just after the extraction to limit the risk that the lid dries on the downstream piercing arrangement 12 in particular around the spikes 121 and to facilitate ejection

This operation can be obtained by moving the upstream enclosing part 2 in direction of the downstream enclosing part 1 as developed above in relation with Figure 4D.

Although the invention has been described with reference to the above illustrated embodiments, it will be appreciated that the invention as claimed is not limited in any way by these illustrated embodiments.

Variations and modifications may be made without departing from the scope of the invention as defined in the claims.

**List of references in the drawings :**

| | | | |
|---|---|---|---|
| downstream enclosing part | | | 1 |
| pod holder | | | 11 |
| retaining and positioning elements | | | 11a, 11b |
| | holding surface | | 111a, 111b |
| | arc-shaped ridge | | 112a, 112b |
| downstream plate piercing arrangement | | | 12 |
| spikes | | | 121 |
| peripheral area | | | 13 |
| | central part | | 131 |
| | shaft | | 133a, 133b |
| | receiving area | | 134a, 134b |
| chassis | | | 14 |
| upstream enclosing part | | | 2 |
| | cage | | 21 |
| | edge | | 211 |
| | sidewall | | 212 |
| | upstream piercing arrangement | | 22 |
| | rising elements | | 23 |
| | seal | | 24 |
| | liquid injector | | 25 |
| | protrusion | | 26a, 26b |
| | | indentation | 261a, 261b |
| pod | | | 3, 3' |
| body | | | 31, 31' |
| | side wall | | 311, 311' |
| | | top end | 3111 |
| | top opening | | 312 |
| | bottom wall | | 313 |
| | flange | | 314 |
| | top face | | 3141 |
| | bottom face | | 3142 |
| lid | | | 32 |
| insertion section | | | 4 |
| extraction chamber | | | 5 |
| lateral sheet | | | 6a, 6b |

## Claims

1. A device for extracting a beverage ingredient by supplying an extraction liquid such as heated water into a pod,
said pod (3, 3') comprising :
- a pod body (31), said pod body comprising :
. a side wall (311) and a bottom wall (313) defining a chamber, said chamber extending axially between the bottom and a top end (3111) of the sidewall, said top end defining a top opening (312)
. a circumferential annular body flange (314) projecting radially outward from the top end (3111) of the sidewall, said body flange comprising a top surface opposite to the chamber with respect to the opening,
said pod body containing a beverage ingredient,
and
- a plane top lid (32) attached to the top surface of the circumferential flange, said plane top lid closing the top opening of the pod body,
and
said device comprising :
- upstream and downstream pod enclosing parts (1, 2) relatively translatable along a longitudinal axis (XX') between an open position for inserting and/or ejecting the pod (3) and a closed position for forming an extraction chamber (5) enclosing the pod (3) during extraction,
- the upstream pod enclosing part (2) defining a cage (21) and bearing an upstream piercing arrangement (22) for opening the bottom wall (313) of the pod (3) and a liquid injector (25),
- the downstream pod enclosing part (1) defining a plate transverse to the longitudinal axis (XX'), said plate comprising :
. a fixed downstream plane piercing arrangement (12) for opening the lid (32) of the pod (3),
and
. a peripheral area (13), said peripheral area (13) surrounding the fixed downstream plane piercing arrangement (12),
and
- an insertion section (4) for inserting the pod (3) in the device, said insertion section (4) being designed to position the pod (3) with the plane top lid (32) facing the fixed downstream plane piercing arrangement (12), and
wherein, in the closed position :
- a central part (131) of the peripheral area (13) of the downstream pod enclosing part (1), the fixed downstream plane piercing arrangement (12) and the cage (21) of the upstream pod enclosing part (2) form the extraction chamber (5), and
- an edge (211) of the opened end of the cage (21) defined by the upstream pod enclosing part (2) faces the central part (131) of the peripheral area (13) of the downstream pod enclosing part (1),
and
wherein the peripheral area (13) of the downstream pod enclosing part (1) is able to pivot around an axis (YY'), said axis being transversal to the longitudinal axis (XX') and positioned at the bottom of the downstream pod enclosing part (1), the peripheral area (13) being able to pivot in the direction of the upstream pod enclosing part (2).

2. A device according to the precedent claim, wherein the fixed downstream plane piercing arrangement (12) is circular and the central part (131) of the peripheral area (13) of the downstream pod enclosing part (1) forms an annular area.

3. A device according to Claim 1 or 2, wherein the upstream pod enclosing part (2) comprises pulling means (261a, 261b) configured to engage with upper parts (136a,136b) of the peripheral area (13) of the downstream pod enclosing part (1), when the upstream pod enclosing part (2) is moved from the closed position to an open position for ejecting the pod (3).

4. A device according to any one of the precedent claims, wherein said device comprises a pod holder (11), said pod holder (11) being attached to said peripheral area (13) of the downstream pod enclosing part (1) and said pod holder (11) being movable between :
- a receiving position for receiving and holding the lid (32) of the pod (3) in front of the fixed downstream plane piercing arrangement (12), and
- a retracted position at the lateral sides of the fixed downstream plane piercing arrangement (12).

5. Beverage preparation machine comprising an extraction device according to any one of Claims 1 to 4.

6. System comprising an extraction device according to any one of Claims 1 to 4 and a pod, or a beverage preparation machine according to Claim 5 and a pod,
wherein the pod (3, 3') comprises :
- a pod body (31), said pod body comprising :
. a side wall (311) and a bottom wall (313) defining a chamber, said chamber extending axially between the bottom and a top end (3111) of the sidewall, said top end defining a top opening (312)
. a circumferential annular body flange (314) projecting radially outward from the top end (3111) of the sidewall, said body flange comprising a top surface opposite to the chamber with respect to the opening,
said pod body containing a beverage ingredient,
and
- a plane top lid (32) attached to the top surface of the circumferential flange, said plane top lid closing the top opening of the pod body,
and wherein, when the upstream and downstream pod enclosing parts (1, 2) are in the closed position,
the central part (131) of the peripheral area (12) of the downstream pod enclosing part (1) is designed to face the circumference of the top end (3111) of the sidewall of the pod body (31).

7. System according to the precedent claim, wherein the pod body (31) and the lid (32) of the pod (3) are made of paper material.

8. System according to Claim 6 or 7, wherein the mechanical properties of the paper material decreases when it is wetted.

9. System according to any one of Claims 6 to 8, wherein the elastic modulus of the paper material becomes ten times less when it is wetted.

10. System according to any one of Claims 6 to 9, wherein the paper material of the pod (3) presents :
- an elastic modulus of at least 2000 MPa when dry and of less than 250 MPa when wet, and/or
- a tensile strength of at least 30 MPa when dry and less than 10 MPa when wet.

11. Use of a pod (3, 3') for preparing a beverage in a device for extracting a beverage ingredient according to any one of Claims 1 to 4 or with a beverage machine according to Claim 5 or in a system according to any one of Claims 6 to 10,
said pod (3, 3') comprising :
- a pod body (31), said pod body comprising :
. a side wall (311) and a bottom wall (313) defining a chamber, said chamber extending axially between the bottom and a top end (3111) of the sidewall,
. a circumferential annular body flange (314) projecting radially outward from the top end (3111) of the sidewall, said body flange comprising a top face (3141) opposite to the chamber with respect to the opening,
said pod body containing a beverage ingredient,
and
- a plane top lid (32) attached to the top face (3141) of the body flange, said plane top lid (32) closing the top opening of the pod body (31).

12. Use according to the precedent claim wherein the pod body (31) and the lid (32) of the pod (3) are made of paper material.

13. Use according to the precedent claim wherein the mechanical properties of the paper material decreases when it is wetted.

14. Use according to the precedent claim wherein the elastic modulus of the paper material becomes ten times less when it is wetted.

15. Use according to the precedent claim wherein the paper material of the pod (3) presents :
- an elastic modulus of at least 2000 MPa when dry and of less than 250 MPa when wet, and/or
- a tensile strength of at least 30 MPa when dry and less than 10 MPa when wet.

## Patentansprüche

1. Vorrichtung zum Extrahieren eines Getränkeinhaltsstoffs durch Zuführen einer Extraktionsflüssigkeit, wie erwärmtes Wasser, in eine Kapsel,
die Kapsel (3, 3') umfassend:
- einen Kapselkörper (31), der Kapselkörper umfassend:
. eine Seitenwand (311) und eine untere Wand (313), die eine Kammer definieren, wobei sich die Kammer axial zwischen dem Boden und einem oberen Ende (3111) der Seitenwand erstreckt, wobei das obere Ende eine obere Öffnung (312) definiert
. einen umlaufenden ringförmigen Körperflansch (314), der von dem oberen Ende (3111) der Seitenwand radial nach außen vorsteht, der Körperflansch umfassend eine obere Oberfläche, die der Kammer hinsichtlich der Öffnung gegenüberliegt,
wobei der Kapselkörper einen Getränkeinhaltsstoff enthält, und
- einen ebenen oberen Deckel (32), der an der oberen Oberfläche des umlaufenden Flansches angebracht ist, wobei der ebene obere Deckel die obere Öffnung des Kapselkörpers verschließt,
und
die Vorrichtung umfassend:
- einen stromaufwärts gelegenen und einen stromabwärts gelegenen kapselumschließenden Teil (1, 2), die entlang einer Längsachse (XX') zwischen einer offenen Position zum Einführen und/oder Auswerfen der Kapsel (3) und einer geschlossenen Position zum Ausbilden einer Extraktionskammer (5) relativ verschiebbar sind, die die Kapsel (3) während einer Extraktion umschließen,
- der stromaufwärts gelegene kapselumschließende Teil (2) einen Korb (21) definiert und eine stromaufwärts gelegene Durchstechvorrichtung (22) zum Öffnen der unteren Wand (313) der Kapsel (3) und einen Flüssigkeitsinjektor (25) trägt,
- der stromabwärts gelegene kapselumschließende Teil (1) eine Platte definiert, die quer zu der Längsachse (XX') verläuft, die Platte umfassend:
. eine fixierte stromabwärts gelegene Ebenendurchstechanordnung (12) zum Öffnen des Deckels (32) der Kapsel (3), und
. einen peripheren Bereich (13), wobei der periphere Bereich (13) die feste, stromabwärts gelegene Ebenendurchstechanordnung (12) umgibt,
und
- einen Einführabschnitt (4) zum Einführen der Kapsel (3) in die Vorrichtung, wobei der Einführabschnitt (4) konzipiert ist, um die Kapsel (3) mit dem ebenen oberen Deckel (32) auf die fixierte stromabwärts gelegene Ebenendurchstechanordnung (12) gerichtet zu positionieren, und
wobei, in der geschlossenen Position:
- ein zentraler Teil (131) des peripheren Bereichs (13) des stromabwärts gelegenen kapselumschließenden Teils (1), die feste stromabwärts gelegene Ebenendurchstechanordnung (12) und der Korb (21) des stromaufwärts gelegenen kapselumschließenden Teils (2) die Extraktionskammer (5) ausbilden, und
- eine Kante (211) des geöffneten Endes des Korbs (21), die durch den stromaufwärts gelegenen kapselumschließenden Teil (2) definiert ist, dem Mittelteil (131) des peripheren Bereichs (13) des stromabwärts gelegenen kapselumschließenden Teil (1) zugewandt ist,
und
wobei der periphere Bereich (13) des stromabwärts gelegenen kapselumschließenden Teils (1) in der Lage ist, um eine Achse (YY') herum zu schwenken, wobei die Achse die quer zu der Längsachse (XX') verläuft und sich an dem Boden des stromabwärts gelegenen kapselumschließenden Teils (1) befindet, wobei der periphere Bereich (13) in der Lage ist, in die Richtung des stromaufwärts gelegenen kapselumschließenden Teils (2) zu schwenken.

2. Vorrichtung nach dem vorstehenden Anspruch, wobei die feste stromabwärts gelegene Ebenendurchstechanordnung (12) kreisförmig ist und der zentrale Teil (131) des peripheren Bereichs (13) des stromabwärts gelegenen kapselumschließenden Teils (1) einen ringförmigen Bereich ausbildet.

3. Vorrichtung nach Anspruch 1 oder 2, wobei der stromaufwärts gelegene kapselumschließende Teil (2) Zugmittel (261a, 261b) umfasst, die konfiguriert sind, um mit den oberen Teilen (136a, 136b) des peripheren Bereichs (13) des stromabwärts gelegenen kapselumschließenden Teils (1) in Eingriff zu nehmen, wenn der stromaufwärts gelegene kapselumschließende Teil (2) von der geschlossenen Position in eine offene Position zum Auswerfen der Kapsel (3) bewegt wird.

4. Vorrichtung nach einem der vorstehenden Ansprüche, wobei die Vorrichtung einen Kapselhalter (11) umfasst, wobei der Kapselhalter (11) an dem peripheren Bereich (13) des stromabwärts gelegenen kapselumschließenden Teils (1) angebracht ist und der Kapselhalter (11) bewegbar ist zwischen:
- einer Aufnahmeposition zum Aufnehmen und Halten des Deckels (32) der Kapsel (3) vor der fixierten stromabwärts gelegenen Ebenendurchstechanordnung (12), und
- einer zurückgezogenen Position an den lateralen Seiten der fixierten stromabwärts gelegenen Ebenendurchstechanordnung (12).

5. Getränkezubereitungsmaschine, umfassend eine Extraktionsvorrichtung nach einem der Ansprüche 1 bis 4.

6. System, umfassend eine Extraktionsvorrichtung nach einem der Ansprüche 1 bis 4 und eine Kapsel oder eine Getränkezubereitungsmaschine nach Anspruch 5 und eine Kapsel, wobei die Kapsel (3, 3') umfasst:
- einen Kapselkörper (31), der Kapselkörper umfassend:
. eine Seitenwand (311) und eine untere Wand (313), die eine Kammer definieren, wobei sich die Kammer axial zwischen dem Boden und einem oberen Ende (3111) der Seitenwand erstreckt, wobei das obere Ende eine obere Öffnung (312) definiert
. einen umlaufenden ringförmigen Körperflansch (314), der von dem oberen Ende (3111) der Seitenwand radial nach außen vorsteht, der Körperflansch umfassend eine obere Oberfläche, die hinsichtlich der Öffnung der Kammer gegenüberliegt, wobei der Kapselkörper einen Getränkeinhaltsstoff enthält, und
- einen ebenen oberen Deckel (32), der an der oberen Oberfläche des umlaufenden Flansches angebracht ist, wobei der ebene obere Deckel die obere Öffnung des Kapselkörpers verschließt,
und wobei, wenn sich der stromaufwärts gelegene und der stromabwärts gelegene kapselumschließende Teil (1, 2) in der geschlossenen Position befinden,
der zentrale Teil (131) des peripheren Bereichs (12) des stromabwärts gelegenen kapselumschließenden Teils (1) konzipiert ist, um dem Umfang des oberen Endes (3111) der Seitenwand des Kapselkörpers (31) zugewandt zu sein.

7. System nach dem vorstehenden Anspruch, wobei der Kapselkörper (31) und der Deckel (32) der Kapsel (3) aus Papiermaterial hergestellt sind.

8. System nach Anspruch 6 oder 7, wobei die mechanischen Eigenschaften des Papiermaterials abnehmen, wenn es nass wird.

9. System nach einem der Ansprüche 6 bis 8, wobei der Elastizitätsmodul des Papiermaterials um ein Zehnfaches abnimmt, wenn es nass wird.

10. System nach einem der Ansprüche 6 bis 9, wobei das Papiermaterial der Kapsel (3) präsentiert:
- ein Elastizitätsmodul von mindestens 2000 MPa wenn in einem trockenen Zustand und von weniger als 250 MPa wenn in einem nassen Zustand und/oder
- eine Zugfestigkeit von mindestens 30 Mpa wenn in dem trockenen Zustand und weniger als 10 Mpa wenn in dem nassen Zustand.

11. Verwendung einer Kapsel (3, 3') zum Zubereiten eines Getränks in einer Vorrichtung zum Extrahieren eines Getränkeinhaltsstoffs nach einem der Ansprüche 1 bis 4 oder mit einer Getränkemaschine nach Anspruch 5 oder in einem System nach einem der Ansprüche 6 bis 10,
die Kapsel (3, 3') umfassend:
- einen Kapselkörper (31), der Kapselkörper umfassend:
. eine Seitenwand (311) und eine untere Wand (313), die eine Kammer definieren, wobei die Kammer sich zwischen dem unteren und einem oberen Ende (3111) der Seitenwand axial erstreckt,
. einen umlaufenden ringförmigen Körperflansch (314), der von dem oberen Ende (3111) der Seitenwand radial nach außen vorsteht, der Körperflansch umfassend eine obere Fläche (3141), die der Kammer hinsichtlich der Öffnung gegenüberliegt,
wobei der Kapselkörper einen Getränkeinhaltsstoff enthält, und
- einen ebenen oberen Deckel (32), der an der oberen Fläche (3141) des Körperflansches angebracht ist, wobei der ebene obere Deckel (32) die obere Öffnung des Kapselkörpers (31) verschließt.

12. Verwendung nach dem vorstehenden Anspruch, wobei der Kapselkörper (31) und der Deckel (32) der Kapsel (3) aus Papiermaterial hergestellt sind.

13. Verwendung nach dem vorstehenden Anspruch, wobei die mechanischen Eigenschaften des Papiermaterials abnehmen, wenn es nass wird.

14. Verwendung nach dem vorstehenden Anspruch, wobei der Elastizitätsmodul des Papiermaterials um das Zehnfache abnimmt, wenn es nass wird.

15. Verwendung nach einem vorstehenden Anspruch, wobei das Papiermaterial der Kapsel (3) präsentiert:
- ein Elastizitätsmodul von mindestens 2000 MPa wenn in dem trockenen Zustand und von weniger als 250 MPa wenn in dem nassen Zustand und/oder
- eine Zugfestigkeit von mindestens 30 Mpa wenn in dem trockenen Zustand und weniger als 10 Mpa wenn in dem nassen Zustand.

## Revendications

1. Dispositif permettant d'extraire un ingrédient de boisson en fournissant un liquide d'extraction tel que de l'eau chauffée dans une dosette,
ladite dosette (3, 3') comprenant :
- un corps de dosette (31), ledit corps de dosette comprenant :
. une paroi latérale (311) et une paroi de fond (313) définissant une chambre, ladite chambre s'étendant axialement entre le fond et une extrémité supérieure (3111) de la paroi latérale, ladite extrémité supérieure définissant une ouverture supérieure (312)
. une bride de corps annulaire circonférentielle (314) faisant saillie radialement vers l'extérieur à partir de l'extrémité supérieure (3111) de la paroi latérale, ladite bride de corps comprenant une surface supérieure opposée à la chambre par rapport à l'ouverture,
ledit corps de dosette contenant un ingrédient de boisson, et
- un couvercle supérieur plan (32) fixé à la surface supérieure de la bride circonférentielle, ledit couvercle supérieur plan fermant l'ouverture supérieure du corps de dosette,
et
ledit dispositif comprenant :
- des parties d'enfermement de dosette amont et aval (1, 2) relativement mobiles le long d'un axe longitudinal (XX') entre une position ouverte pour l'insertion et/ou l'éjection de la dosette (3) et une position fermée pour la formation d'une chambre d'extraction (5) enfermant la dosette (3) lors de l'extraction,
- la partie d'enfermement de dosette amont (2) définissant une cage (21) et portant un agencement de perçage amont (22) pour l'ouverture de la paroi de fond (313) de la dosette (3) et un injecteur de liquide (25),
- la partie d'enfermement de dosette aval (1) définissant une plaque transversale à l'axe longitudinal (XX'), ladite plaque comprenant :
. un agencement de perçage plan aval fixe (12) permettant d'ouvrir le couvercle (32) de la dosette (3), et
. une zone périphérique (13), ladite zone périphérique (13) entourant l'agencement de perçage plan aval fixe (12),
et
- une section d'insertion (4) permettant d'insérer la dosette (3) dans le dispositif, ladite section d'insertion (4) étant conçue pour positionner la dosette (3) avec le couvercle supérieur plan (32) faisant face à l'agencement de perçage plan aval fixe (12), et
dans lequel, dans la position fermée :
- une partie centrale (131) de la zone périphérique (13) de la partie d'enfermement de dosette aval (1), l'agencement de perçage plan aval fixe (12) et la cage (21) de la partie d'enfermement de dosette amont (2) forment la chambre d'extraction (5), et
- un bord (211) de l'extrémité ouverte de la cage (21) définie par la partie d'enfermement de dosette amont (2) fait face à la partie centrale (131) de la zone périphérique (13) de la partie d'enfermement de dosette aval (1),
et
dans lequel la zone périphérique (13) de la partie d'enfermement de dosette aval (1) est capable de pivoter autour d'un axe (YY'), ledit axe étant transversal à l'axe longitudinal (XX') et positionné au niveau du fond de la partie d'enfermement de dosette aval (1), la zone périphérique (13) étant capable de pivoter en direction de la partie d'enfermement de dosette amont (2).

2. Dispositif selon la revendication précédente, dans lequel l'agencement de perçage plan aval fixe (12) est circulaire et la partie centrale (131) de la zone périphérique (13) de la partie d'enfermement de dosette aval (1) forme une zone annulaire.

3. Dispositif selon la revendication 1 ou 2, dans lequel la partie d'enfermement de dosette amont (2) comprend des moyens de traction (261a, 261b) conçus pour venir en prise avec des parties supérieures (136a, 136b) de la zone périphérique (13) de la partie d'enfermement de dosette aval (1), lorsque la partie d'enfermement de dosette amont (2) est déplacée de la position fermée à une position ouverte pour l'éjection de la dosette (3).

4. Dispositif selon l'une quelconque des revendications précédentes, dans lequel ledit dispositif comprend un support pour dosette (11), ledit support pour dosette (11) étant fixé à ladite zone périphérique (13) de la partie d'enfermement de dosette aval (1) et ledit support pour dosette (11) étant mobile entre :
- une position de réception pour la réception et le maintien du couvercle (32) de la dosette (3) devant l'agencement de perçage plan aval fixe (12), et
- une position rétractée au niveau des côtés latéraux de l'agencement de perçage plan aval fixe (12).

5. Machine de préparation de boisson comprenant un dispositif d'extraction selon l'une quelconque des revendications 1 à 4.

6. Système comprenant un dispositif d'extraction selon l'une quelconque des revendications 1 à 4 et une dosette, ou machine de préparation de boisson selon la revendication 5 et une dosette,
dans lequel la dosette (3, 3') comprend :
- un corps de dosette (31), ledit corps de dosette comprenant :
. une paroi latérale (311) et une paroi de fond (313) définissant une chambre, ladite chambre s'étendant axialement entre le fond et une extrémité supérieure (3111) de la paroi latérale, ladite extrémité supérieure définissant une ouverture supérieure (312)
. une bride de corps annulaire circonférentielle (314) faisant saillie radialement vers l'extérieur à partir de l'ouverture supérieure (3111) de la paroi latérale, ladite bride de corps comprenant une surface supérieure opposée à la chambre par rapport à l'ouverture, ledit corps de dosette contenant un ingrédient de boisson, et
- un couvercle supérieur plan (32) fixé à la surface supérieure de la bride circonférentielle, ledit couvercle supérieur plan fermant l'ouverture supérieure du corps de dosette,
et dans lequel, lorsque les parties d'enfermement de dosette amont et aval (1, 2) sont dans la position fermée,
la partie centrale (131) de la zone périphérique (12) de la partie d'enfermement de dosette aval (1) est conçue pour faire face à la circonférence de l'extrémité supérieure (3111) de la paroi latérale du corps de dosette (31).

7. Système selon la revendication précédente, dans lequel le corps de dosette (31) et le couvercle (32) de la dosette (3) sont faits d'un matériau en papier.

8. Système selon la revendication 6 ou 7, dans lequel les propriétés mécaniques du matériau en papier diminuent lorsqu'il est mouillé.

9. Système selon l'une quelconque des revendications 6 à 8, dans lequel le module d'élasticité du matériau en papier est dix fois moins élevé lorsqu'il est mouillé.

10. Système selon l'une quelconque des revendications 6 à 9, dans lequel le matériau en papier de la dosette (3) présente :
- un module d'élasticité d'au moins 2000 MPa à l'état sec et de moins de 250 MPa à l'état humide, et/ou
- une résistance à la traction d'au moins 30 MPa à l'état sec et de moins de 10 MPa à l'état humide.

11. Utilisation d'une dosette (3, 3') pour la préparation d'une boisson dans un dispositif permettant d'extraire un ingrédient de boisson selon l'une quelconque des revendications 1 à 4 ou avec une machine à boisson selon la revendication 5 ou dans un système selon l'une quelconque des revendications 6 à 10,
ladite dosette (3, 3') comprenant :
- un corps de dosette (31), ledit corps de dosette comprenant :
. une paroi latérale (311) et une paroi de fond (313) définissant une chambre, ladite chambre s'étendant axialement entre le fond et une ouverture supérieure (3111) de la paroi latérale,
. une bride de corps annulaire circonférentielle (314) faisant saillie radialement vers l'extérieur à partir de l'ouverture supérieure (3111) de la paroi latérale, ladite bride de corps comprenant une face supérieure (3141) opposée à la chambre par rapport à l'ouverture,
ledit corps de dosette contenant un ingrédient de boisson, et
- un couvercle supérieur plan (32) fixé à la surface supérieure (3141) de la bride de corps, ledit couvercle supérieur plan (32) fermant l'ouverture supérieure du corps de dosette (31).

12. Utilisation selon la revendication précédente, dans laquelle le corps de dosette (31) et le couvercle (32) de la dosette (3) sont faits d'un matériau en papier.

13. Utilisation selon la revendication précédente, dans laquelle les propriétés mécaniques du matériau en papier diminuent lorsqu'il est mouillé.

14. Utilisation selon la revendication précédente, dans laquelle le module d'élasticité du matériau en papier est dix fois moins élevé lorsqu'il est mouillé.

15. Utilisation selon la revendication précédente, dans laquelle le matériau en papier de la dosette (3) présente :
- un module d'élasticité d'au moins 2000 MPa à l'état sec et de moins de 250 MPa à l'état humide, et/ou
- une résistance à la traction d'au moins 30 MPa à l'état sec et de moins de 10 MPa à l'état humide.
